(19) Europäisches Patentamt
European Patent Office
Office européen des brevets

(11) **EP 2 583 864 A2**

(12) **EUROPÄISCHE PATENTANMELDUNG**

(43) Veröffentlichungstag:
24.04.2013  Patentblatt 2013/17

(51) Int Cl.:
*B60Q 1/26* (2006.01)    *B60Q 9/00* (2006.01)
*B60R 1/12* (2006.01)    *G08G 1/16* (2006.01)

(21) Anmeldenummer: 12181746.4

(22) Anmeldetag: 24.08.2012

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 17.10.2011  DE 102011084618

(71) Anmelder: **ROBERT BOSCH GMBH**
**70442 Stuttgart (DE)**

(72) Erfinder: **Arnon, Marc**
**71726 Benningen Am Neckar (DE)**

(54) **Fahrerassistenzsystem**

(57)    Fahrerassistenzsystem, mit einer Außenspiegelanordnung (22), die einen teildurchlässigen Spiegel (24) und eine Anzeigeeinrichtung (20, 31) zum Anzeigen wenigstens eines optischen Warnsignals (34) des Fahrerassistenzsystems aufweist, wobei die Anzeigeeinrichtung (20, 31) eine hinter dem teildurchlässigen Spiegel (24) angeordnete Optik (31) aufweist, die dazu eingerichtet ist, das optische Warnsignal (34) in Form eines für einen Fahrer hinter dem teildurchlässigen Spiegel (24) sichtbaren virtuellen Bildes (36) sichtbar zu machen.

## Fig. 1

## Beschreibung

STAND DER TECHNIK

Die Erfindung betrifft ein Fahrerassistenzsystem mit einer Außenspiegelanordnung, die eine Anzeigeeinrichtung zum Anzeigen wenigstens eines optischen Warnsignals des Fahrerassistenzsystems aufweist.

Ein Beispiel für ein derartiges Fahrerassistenzsystem ist ein Spurwechselassistent für Kraftfahrzeuge. Bekannte Spurwechselassistenten weisen beispielsweise ein Sensorsystem zur Ortung von Fahrzeugen auf Nebenspuren im Rückraum des eigenen Fahrzeugs auf und sollen den Fahrer davor bewahren, auf eine Nebenspur auszuscheren, wenn sich auf dieser Nebenspur von hinten ein überholendes Fahrzeug nähert, so dass es zu einer Kollisionsgefahr oder zumindest zu einer Behinderung des überholenden Fahrzeuges käme. Als Sensorsystem wird bei solchen Spurwechselassistenten zumeist ein Rückraumradar eingesetzt, also ein Radarsensor, der nach hinten oder schräg nach hinten gerichtet ist und in der Lage ist, die Abstände, Relativgeschwindigkeiten und Azimutwinkel der georteten Fahrzeuge zu messen. Wenn ein Fahrzeug auf der Nebenspur geortet wird und anhand des Abstands und der Relativgeschwindigkeit festgestellt wird, dass ein Wechsel auf die Nebenspur nicht ohne Gefährdung des Nachfolgeverkehrs möglich ist, und wenn außerdem aufgrund der Verkehrssituation oder aufgrund von Aktionen des Fahrers die Betätigung des Fahrtrichtungsanzeigers, Lenkaktionen und dergleichen erkennbar ist, dass der Fahrer einen Spurwechsel beabsichtigt, so wird über eine Fahrerschnittstelle ein Warnhinweis an den Fahrer ausgegeben. Besonders zweckmäßig ist die Ausgabe eines optischen Warnsignals durch eine Anzeigeeinrichtung, die in den betreffenden Außenspiegel des Fahrzeugs integriert ist.

Ein Warnsignal erfolgt bei solchen Systemen meist optisch durch eine im Glas oder im Gehäuse des Außenspiegels angebrachte Anzeige. So ist aus DE 103 18 741 A1 ein Fahrerassistentensystem mit einem Spurwechselassistenten bekannt, bei dem eine Leuchtdiode am Außenspiegel zwischen der Spiegelfläche und der Fahrzeugaußenseite im Bereich der Spiegelhalterung angeordnet ist. Die Leuchtdiode wird bei einem hohen Gefährdungsgrad so betrieben, dass sie ein rotes Blinksignal abgibt. Gemäß einem weiteren Vorschlag umfasst die Spiegelfläche einen Flachbildschirm, so dass dem Fahrer besonders detaillierte Informationen gegeben werden können.

OFFENBARUNG DER ERFINDUNG

Bei einer Warnanzeige im Glas des Außenspiegels muss der Fahrer zur Wahrnehmung der rückwärtigen Verkehrsteilnehmer und des Warnsignals seine Augen auf verschiedene Tiefenebenen fokussieren.

Aufgabe der Erfindung ist es, ein Fahrerassistenzsystem zu schaffen, bei dem optische Warnsignale einfacher wahrgenommen werden können.

Diese Aufgabe wird gelöst durch ein Fahrerassistenzsystem mit Außenspiegelanordnung, die einen teildurchlässigen Spiegel und eine Anzeigeeinrichtung zum Anzeigen wenigstens eines optischen Warnsignals des Fahrerassistenzsystems aufweist, wobei die Anzeigeeinrichtung eine hinter dem teildurchlässigen Spiegel angeordnete Optik aufweist, die dazu eingerichtet ist, das optische Warnsignal in Form eines für einen Fahrer hinter dem teildurchlässigen Spiegel sichtbaren virtuellen Bildes sichtbar zu machen.

Die Darstellung des virtuellen Bilds des Warnsignals kann somit in einer hinter dem teildurchlässigen Spiegel und vorzugsweise insbesondere hinter der Außenspiegelanordnung liegenden Fokusebene erfolgen. Somit ist zur optischen Wahrnehmung des Warnsignals keine Fokussierung der Augen des Betrachters auf die Spiegelfläche erforderlich. Dadurch wird dem Fahrer eine Betrachtung des Warnsignals und des Spiegelbildes des rückwärtigen Fahrzeugumfelds erleichtert. Insbesondere kann eine gleichzeitige Wahrnehmung des Warnsignals und eines Spiegelbildes eines Verkehrsteilnehmers erleichtert werden.

Vorteilhafte Ausgestaltungen und Weiterbildungen der Erfindung sind in den Unteransprüchen angegeben.

Vorzugsweise weist die Anzeigeeinrichtung eine Leuchtanzeigeeinrichtung auf. Diese ist vorzugsweise in einem Haltearm der Außenspiegelanordnung angeordnet. Dadurch kann der Lichtweg verlängert werden.

Vorzugsweise weist die Anzeigeeinrichtung eine Leuchtanzeigeeinrichtung auf, und die Optik der Anzeigeeinrichtung ist dazu eingerichtet, das optische Warnsignal in Form des virtuellen Bildes sichtbar zu machen, wobei das virtuelle Bild gegenüber einer Darstellung auf der Leuchtanzeigeeinrichtung vergrößert ist. Dadurch kann eine größere Bildweite oder scheinbare Entfernung des virtuellen Bildes erreicht werden.

Vorzugsweise weist die Optik der Anzeigeeinrichtung einen Spiegel auf. Ein Spiegel ermöglicht die Umlenkung des Lichtes einer Leuchtanzeigeeinrichtung und kann so den Lichtweg verlängern. Besonders bevorzugt ist dieser Spiegel ein Hohlspiegel. Dadurch kann in einfacher Weise eine Darstellung des virtuellen Bilds des Warnsignals in einer entfernten Fokusebene erfolgen. In einer Ausführungsform weist die Anzeigeeinrichtung eine Leuchtanzeigeeinrichtung und die hinter dem teildurchlässigen Spiegel angeordnete Optik in Form eines Hohlspiegels auf, wobei der Hohlspiegel dazu eingerichtet ist, das optische Warnsignal in Form eines für einen Fahrer hinter dem teildurchlässigen Spiegel sichtbaren virtuellen Bildes eines von der Leuchtanzeigeeinrichtung angezeigten optischen Warnsignals sichtbar zu machen. Durch eine im Haltearm der Außenspiegelanordnung angeordnete Leuchtanzeigeeinrichtung kann der Abstand zum Hohlspiegel vergrößert werden.

Vorzugsweise ist die Anzeigeeinrichtung in einem Gehäuse der Außenspiegelanordnung verborgen. Die Außenspiegelanordnung kann beispielsweise einen Haltearm umfassen, und die Anzeigeeinrichtung, insbesondere eine Leuchtanzeigeeinrichtung der Anzeigeeinrichtung, kann zumindest teilweise im Haltearm verborgen sein. Die im Gehäuse verborgene Anzeigeeinrichtung kann beispielsweise ausschließlich in Form des von der ebenfalls im Gehäuse verborgenen Optik erzeugten virtuellen Bildes durch den teildurchlässigen Spiegel wahrnehmbar sein. Die Anzeigeeinrichtung ist somit optisch unauffällig in die Außenspiegelanordnung integrierbar.

Vorzugsweise weist die Leuchtanzeigeeinrichtung selbstleuchtende Anzeigeelemente auf, beispielsweise selbstleuchtende OLED-Anzeigeelemente. Dadurch kann ein besonders guter Kontrast zwischen einem leuchtenden, angezeigten Warnsignal und nichtleuchtenden Bereichen der Leuchtanzeigeeinrichtung erzielt werden. Dies ist besonders vorteilhaft, da es ermöglicht, dass als virtuelles Bild lediglich ein leuchtendes Warnsignal oder Warnsymbol wahrgenommen wird, das dem Spiegelbild des Außenspiegels überlagert ist.

Bei der Leuchtanzeigeeinrichtung kann es sich auch um ein Laserdisplay handeln. Dies ermöglicht einen besonders guten Kontrast und eine hohe Leuchtdichte. Ein derartiges Laserdisplay ist beispielsweise für Head-Up-Displays bekannt. Es weist beispielsweise eine Laseroptik auf, die dazu eingerichtet ist, ein Warnsignal auf eine reflektierende Oberfläche des Laserdisplays zu schreiben oder projizieren.

Das Fahrerassistenzsystem umfasst beispielsweise eine Fahrerpositions-Detektionseinrichtung zum Detektieren einer Position des Fahrers, insbesondere einer Kopfposition des Fahrers, wobei die Anzeigeeinrichtung zum Anzeigen von Warnsignalen an unterschiedlichen Positionen eingerichtet ist, und wobei das Fahrerassistenzsystem dazu eingerichtet ist, die Anzeigeeinrichtung anzusteuern zur Ausgabe eines Warnsignals an einer Position, die auf einer detektierten Position des Fahrers basiert. Dadurch kann die Position, an der das virtuelle Bild zu sehen ist, an die Fahrerposition angepasst werden.

Gemäß einer Weiterbildung der Erfindung weist das Fahrerassistenzsystem ein Überwachungssystem, beispielsweise ein Sensorsystem, zur Ortung von Objekten im seitlichen und/oder rückwärtigen Umfeld des eigenen Fahrzeugs auf, und die Anzeigeeinrichtung ist zum Anzeigen von Warnsignalen an unterschiedlichen Positionen eingerichtet, und das Fahrerassistenzsystem ist dazu eingerichtet, die Anzeigeeinrichtung anzusteuern zur Ausgabe eines Warnsignals an einer Position, die von einer Position eines georteten Objektes abhängig ist. Mit anderen Worten ist das Fahrerassistenzsystem dazu eingerichtet, eine Position zum Anzeigen eines Warnsignals zu bestimmen in Abhängigkeit von einer Position eines georteten Objekts. Dadurch kann beispielsweise die Position der angezeigten Warnsignale einen Hinweis auf die Position des relevanten Objekts im Seitenspiegel angeben. Somit kann gezielter vor bestimmten Objekten oder Hindernissen gewarnt werden. In Verbindung mit der Fahrerpositions-Detektionseinrichtung kann die Position, an der das virtuelle Bild zu sehen ist, besser an die Position des Objektes angepasst werden.

KURZE BESCHREIBUNG DER ZEICHNUNGEN

Ein Ausführungsbeispiel der Erfindung ist in den Zeichnungen dargestellt und in der nachfolgenden Beschreibung näher erläutert.
Es zeigen:

Fig. 1 ein Blockdiagramm eines erfindungsgemäßen Fahrerassistenzsystems; und

Fig. 2 eine schematische Skizze der Außenspiegelanordnung und eines virtuellen Bildes eines optischen Warnsignals.

DETAILLIERTE BESCHREIBUNG EINES AUSFÜHRUNGSBEISPIELS

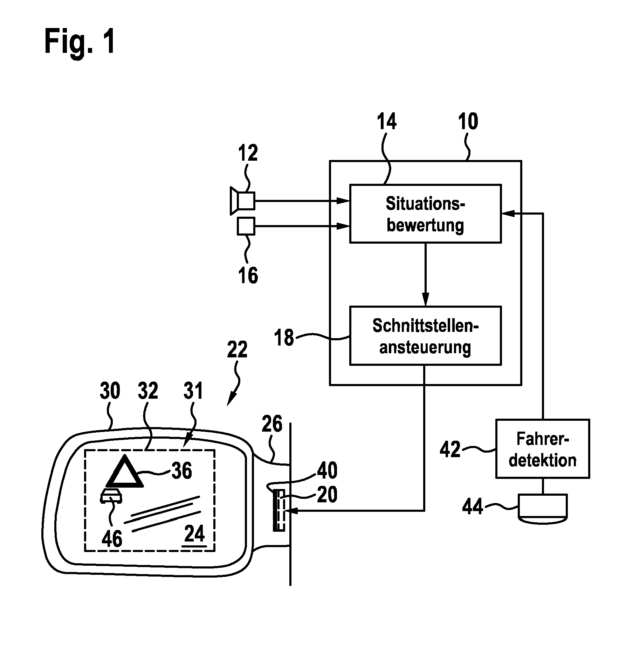

Das in Fig. 1 gezeigte Fahrerassistenzsystem in Form eines Spurwechselassistenten 10 (LCA, Lane Change Assist) umfasst ein Überwachungssystem 12 in Form eines Sensorsystems, beispielsweise ein Rückraumradar, zur Ortung von Fahrzeugen und sonstigen Objekten im seitlichen und/oder rückwärtigen Umfeld des eigenen Fahrzeugs. Der Spurwechselassistent 10 umfasst ein Situationsbewertungsmodul 14, welches Signale von dem Überwachungssystem 12 und von einer Einrichtung 16 zur Erkennung eines Spurwechselwunsches des Fahrers erhält und mit einem Schnittstellenansteuerungsmodul 18 zur Ansteuerung einer Leuchtanzeigeeinrichtung 20 verbunden ist. Die Leuchtanzeigeeinrichtung 20 bildet eine Warneinrichtung zur Ausgabe eines Warnhinweises an den Fahrer, wie weiter unten näher erläutert wird. Das Situationsbewertungsmodul 14 und das Schnittstellenansteuerungsmodul 18 werden beispielsweise durch ein elektronisches Datenverarbeitungssystem mit geeigneter Software gebildet.

Das Situationsbewertungsmodul ist in an sich bekannter Weise dazu ausgebildet, eine Fahrsituation anhand von Signalen des Überwachungssystems 12 zu erkennen und zu bewerten und das Schnittstellenansteuerungsmodul 18 zur Ausgabe eines Warnhinweise an den Fahrer anzusteuern, wenn die Situationsbewertung ergibt, dass es bei einem Ausscheren zu einer Kollision kommen könnte und ein Spurwechselwunsch des Fahrers erkannt wird. Diese Funktion eines Spurwechselassistenten sowie Einrichtungen zur Erkennung eines Spurwechselwunsches des Fahrers sind als solche bekannt und werden hier nicht näher beschrieben.

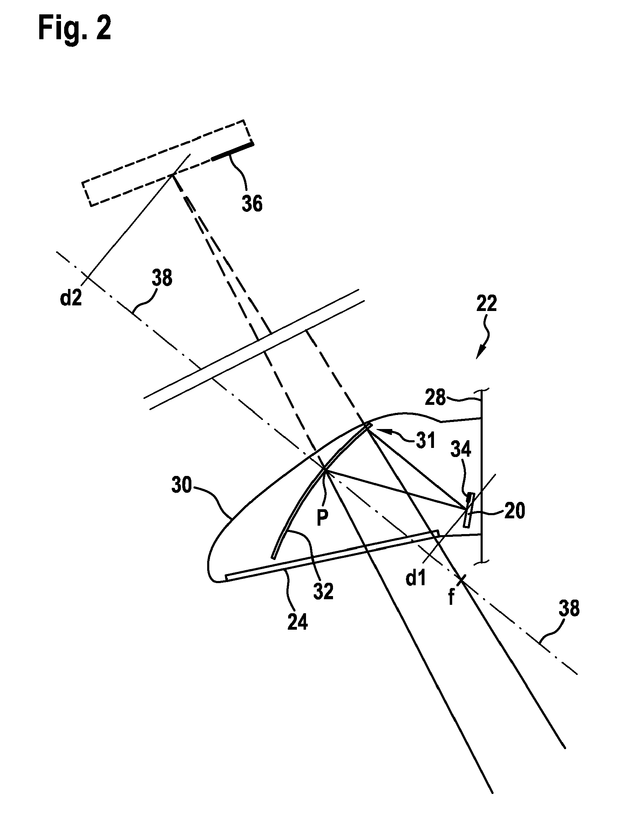

Das erfindungsgemäße Fahrerassistenzsystem umfasst eine in Fig. 1 und Fig. 2 schematisch dargestellte Außenspiegelanordnung 22 mit einem Spiegel 24 und einem Haltearm 26, mit dem die Außenspiegelanordnung an einer Kraftfahrzeugtür 28 oder einem anderen Bereich der Fahrzeugkarosserie befestigt ist.

Der Spiegel 24 ist ein teildurchlässiger Spiegel. Hinter dem Spiegel 24 ist verborgen in einem Gehäuse 30 der Außenspiegelanordnung 22 eine Optik 31 in Form eines Hohlspiegels 32 angeordnet. Die Leuchtanzeigeeinrichtung 20 ist im Haltearm 26 angeordnet und ebenfalls im Gehäuse 30 verborgen.

Der Hohlspiegel 32 ist so relativ zur Leuchtanzeigeeinrichtung 20 angeordnet, dass ein virtuelles Bild der Leuchtanzeigeeinrichtung 20 in einer Ebene hinter dem Hohlspiegel 32 entsteht. Wenn auf der selbstleuchtenden Leuchtanzeigeeinrichtung ein optisches Warnsignal 34 angezeigt wird, wie in Fig. 2 schematisch dargestellt ist, wird ein virtuelles Bild 36 des Warnsignals erzeugt, welches für den Fahrer hinter dem teildurchlässigen Spiegel 24 sichtbar ist, insbesondere in einer hinter dem Hohlspiegel 32 und (scheinbar) hinter der Außenspiegelanordnung liegenden Fokusebene. Die Leuchtanzeigeeinrichtung 20 und die Optik 31 bilden somit eine Anzeigeeinrichtung zum Anzeigen des Warnsignals 34.

Der Abstand d1 der Leuchtanzeigeeinrichtung 20 vom Hohlspiegel 32 und der scheinbare Abstand d2 des virtuellen Bildes hinter dem Hohlspiegel 32 sind dabei näherungsweise durch die Abbildungsgleichung

$$1/d1 + 1/d2 = 1/f$$

mit der Brennweite f des Hohlspiegels verknüpft, wobei d1 positiv ist und einen Abstand auf der Vorderseite des Hohlspiegels bezeichnet und d2 negativ ist und den Abstand des virtuellen Bildes hinter dem Hohlspiegel bezeichnet. Die Leuchtanzeigeeinrichtung 20 ist innerhalb der positiven Brennweite f des Hohlspiegels 32 angeordnet. Der Hohlspiegel 32 hat eine konkave Spiegelfläche mit einem Krümmungsradius, der annähernd das Doppelte der Brennweite f beträgt. Vorzugsweise ist die Spiegelfläche sphärisch gekrümmt.

Fig. 2 zeigt schematisch in einer Schnittdarstellung die Abbildung eines Punktes in der Mitte der Leuchtanzeigeeinrichtung 20 auf das virtuelle Bild. Der Abstand d1 und die Brennweite f sind auf einer durch den Fokus gehenden Hauptachse 38 des Hohlspiegels 32 angegeben. Die Hauptachse 38 trifft radial an dem Punkt P auf den Hohlspiegel 32. Ein vom Mittelpunkt der Leuchtanzeigeeinrichtung 20 ausgehender Strahl, der den Punkt P trifft, wird reflektiert, wobei der Einfallswinkel gleich dem Ausfallswinkel ist. Ein vom Mittelpunkt der Leuchtanzeigeeinrichtung 20 ausgehender Strahl parallel zur Hauptachse 38 wird so reflektiert, dass er durch den Fokus verläuft. Der Ort des virtuellen Bildes ist der scheinbare Ursprung der reflektierten Strahlen. Das virtuelle Bild ist bezüglich der Hauptachse 38 seitengleich. Es ist vergrößert. Der Vergrößerungsfaktor m entspricht dem Quotienten aus der Bildweite d2 des virtuellen Bildes und der Objektweite d1, d.h.: m = d2/d1.

Die Anordnung des Hohlspiegels 32 und der Leuchtanzeigeeinrichtung 20 ist so gewählt, dass virtuelle Bilder 36 von auf der Leuchtanzeigeeinrichtung 20 angezeigten optischen Warnsignalen 34 für den Fahrer sichtbar sind und das Spiegelbild des Verkehrsumfeldes überlagern. Beispielsweise ist der Abstand der virtuellen Bilder 36 von dem teildurchlässigen Spiegel wenigstens 10 cm, vorzugsweise wenigstens 50 cm, besonders bevorzugt wenigstens 1 m. Der Abstand der virtuellen Bilder 36 vom Auge des Fahrers ist vorzugsweise wenigstens 1,5 m, besonders bevorzugt wenigstens 2 m. Eine Entfernung im Bereich von 1,5 m bis 2 m erfordert im allgemeinen noch keine Nahakkommodation des Auges, so dass das virtuelle Bild 36 bei Fernakkommodation des Fahrerauges sichtbar und erkennbar ist und somit die Wahrnehmung des virtuellen Bildes besonders erleichtert wird.

Die Leuchtanzeigeeinrichtung 20 weist beispielsweise mehrere selbstleuchtende Anzeigeelemente 40 auf, etwa eine Anzeigematrix von Anzeigeelementen 40, beispielsweise einem Flachbildschirm. Die Anzeigeelemente 40 sind vorzugsweise OLED-Anzeigeelemente (organische Leuchtdioden). Die Leuchtanzeigeeinrichtung ermöglicht somit die Anzeige von Warnsymbolen. Fig. 1 zeigt schematisch ein virtuelles Bild 36 eines Warnsignals in Form eines Warnsymbols.

Optional ist eine Fahrerpositions-Detektionseinrichtung 42 mit einem Sensor 44 in Form einer Innenraumkamera vorgesehen, um eine Kopfposition des Fahrers zu detektieren.

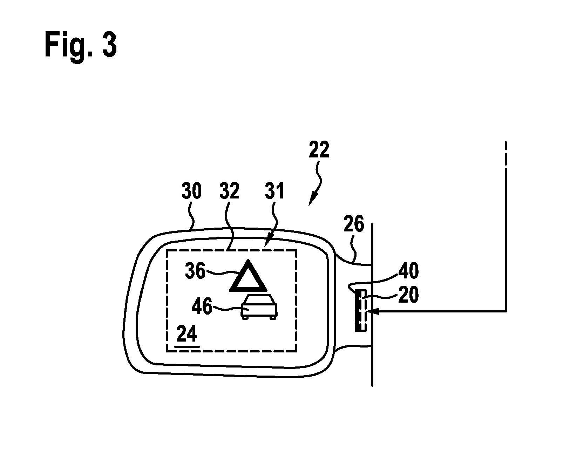

Wie oben erläutert, führt das Situationsbewertungsmodul eine von Signalen des Überwachungssystems 12 abhängige Situationserkennung und -bewertung durch und steuert über das Schnittstellenansteuerungsmodul 18 in Abhängigkeit vom Ergebnis der Situationsbewertung die Leuchtanzeigeeinrichtung 20 zur Erzeugung des optischen Warnsignals 34 an. Dabei bestimmt das Situationsbewertungsmodul eine Position zum Anzeigen des Warnsignals 34 in Abhängigkeit von einer Position eines georteten Objektes 46 und von der detektierten Kopfposition des Fahrers. So kann beispielsweise die Position des virtuellen Bildes 36 des Warnsymbols einen Hinweis über die Position des jeweiligen relevanten Objektes 46 im für den Fahrer sichtbaren Spiegelbild des Spiegels 24 geben. Beispielsweise kann das Situationsbewertungsmodul die Position zum Anzeigen des Warnsignals 34 bestimmen, um die Position des virtuellen Bildes 36 des Warnsymbols der Position des jeweiligen relevanten Objektes 46 im für den Fahrer sichtbaren Spiegelbild des Spiegels 24 anzupassen. So kann beispielsweise bei einem größeren Querversatz eines georteten Objektes relativ zum eigenen Fahrzeug und/oder einer größeren Entfernung des georteten Objektes in Längsrichtung hinter dem Fahrzeug, was einer Position weiter außen im Spiegelbild entspricht, ein Warnsymbol weiter außen angezeigt werden, wie in Fig. 1 schematisch dargestellt ist. Ein Objekt mit geringerem Querversatz und/oder geringerer Entfernung wird demgegenüber, wie in Fig. 3 skizziert, weiter innen im Außenspiegel sichtbar sein, und ein entsprechendes Warnsymbol kann weiter innen angezeigt werden, bei einem linken Außenspiegel also weiter rechts.

Optional kann das Situationsbewertungsmodul dazu eingerichtet sein, auf der Basis der Position eines georteten Objektes und auf der Basis von Abbildungseigenschaften des Außenspiegels 24 eine Position des Objektes im für den Fahrer sichtbaren Spiegelbild des Spiegels 24 zu bestimmen. Die Position zum Anzeigen des Warnsignals 34 kann dann an die bestimmte Position des Objektes im für den Fahrer sichtbaren Spiegelbild angepasst werden.

Während im beschriebenen Beispiel die Optik 31 der Anzeigeeinrichtung lediglich durch den Hohlspiegel 32 gebildet wird, kann das virtuelle Bild des Warnsignals 34 in entsprechender Weise auch durch eine Optik mit einem planen Spiegel und einer Sammellinse erzeugt werden. Wird die Leuchtanzeigeeinrichtung 20 innerhalb der Brennweite der Sammellinse angeordnet, so wird ein vergrößertes virtuelles Bild erzeugt, dessen Bildweite größer ist als die Entfernung der Leuchtanzeigeeinrichtung 20 von der Sammellinse.

Während im beschriebenen Beispiel die Optik 31 ein virtuelles Bild einer Darstellung der Leuchtanzeigeeinrichtung 20 sichtbar macht, sind auch andere Formen von Anzeigeeinrichtungen denkbar. So kann beispielsweise die Optik wenigstens ein Hologramm umfassen, und die Anzeigeeinrichtung kann wenigstens eine Lichtquelle umfassen, um das Hologramm als virtuelles Bild hinter dem teildurchlässigen Spiegel sichtbar zu machen.

Das Überwachungssystem 12 kann alternativ oder zusätzlich zu einem Sensorsystem zur Überwachung eines seitlichen und/oder rückwärtigen Umfelds des eigenen Fahrzeugs ein Fahrzeugkommunikationssystem zum Empfang von Ortsinformation über Fahrzeuge im seitlichen und/oder rückwärtigen Umfelds des eigenen Fahrzeugs aufweisen, insbesondere ein Fahrzeugkommunikationssystem zur Kommunikation mit einem Kommunikationssystem außerhalb des eigenen Fahrzeugs. Solche Systeme werden auch als Car2Car-Kommunikationssystem bezeichnet. Weiter kann das Überwachungssystem 12 dazu eingerichtet sein, Ortsinformation bezüglich des eigenen Fahrzeugs von einen GPS-System zu empfangen. Beispielsweise kann das Überwachungssystem 12 ein GPS-System umfassen. Somit können auch über das Fahrzeugkommunikationssystem Fahrzeuge im Umfeld geortet werden.

## Patentansprüche

1. Fahrerassistenzsystem, mit einer Außenspiegelanordnung (22), die einen teildurchlässigen Spiegel (24) und eine Anzeigeeinrichtung (20, 31) zum Anzeigen wenigstens eines optischen Warnsignals (34) des Fahrerassistenzsystems aufweist, wobei die Anzeigeeinrichtung (20, 31) eine hinter dem teildurchlässigem Spiegel (24) angeordnete Optik (31) aufweist, die dazu eingerichtet ist, das optische Warnsignal (34) in Form eines für einen Fahrer hinter dem teildurchlässigen Spiegel (24) sichtbaren virtuellen Bildes (36) sichtbar zu machen.

2. Fahrerassistenzsystem nach Anspruch 1, mit einem Überwachungssystem (12) zur Überwachung eines seitlichen und/oder rückwärtigen Umfelds des eigenen Fahrzeugs, wobei das Fahrerassistenzsystem dazu eingerichtet ist, in Abhängigkeit von einer von Signalen des Überwachungssystems (12) abhängigen Situationsbewertung die Anzeigeeinrichtung (20, 31) zur Erzeugung wenigstens eines optischen Warnsignals (34) anzusteuern.

3. Fahrerassistenzsystem nach Anspruch 1 oder 2, welches einen Spurwechselassistenten bildet.

4. Fahrerassistenzsystem nach einem der vorstehenden Ansprüche, bei dem die Anzeigeeinrichtung (20, 31) eine Leuchtanzeigeeinrichtung (20) aufweist und die Optik (31) der Anzeigeeinrichtung dazu eingerichtet ist, das optische Warnsignal (34) in Form eines für den Fahrer hinter dem teildurchlässigen Spiegel (24) sichtbaren und gegenüber einer Darstellung auf der Leuchtanzeigeeinrichtung (20) vergrößerten virtuellen Bildes sichtbar zu machen.

5. Fahrerassistenzsystem nach einem der vorstehenden Ansprüche, bei dem die Optik (31) der Anzeigeeinrichtung (20, 31) einen Spiegel (32) aufweist.

6. Fahrerassistenzsystem nach Anspruch 5, bei der der Spiegel (32) der Optik (31) ein Hohlspiegel ist.

7. Fahrerassistenzsystem nach einem der vorstehenden Ansprüche, bei dem die Anzeigeeinrichtung (20, 31) eine Leuchtanzeigeeinrichtung (20) aufweist, die in einem Haltearm (26) der Außenspiegelanordnung (22) angeordnet ist.

8. Fahrerassistenzsystem nach einem der vorstehenden Ansprüche, bei dem die Anzeigeeinrichtung (20, 31) in einem Gehäuse (30) der Außenspiegelanordnung (22) verborgen ist.

9. Fahrerassistenzsystem nach einem der vorstehenden Ansprüche, bei dem die Anzeigeeinrichtung (20, 31) eine Leuchtanzeigeeinrichtung (20) mit selbstleuchtenden Anzeigeelementen (40) aufweist.

10. Fahrerassistenzsystem nach einem der vorstehenden Ansprüche, bei dem die Anzeigeeinrichtung (20, 31) eine Anzeigematrix aufweist.

11. Fahrerassistenzsystem nach einem der vorstehenden Ansprüche, bei dem das Fahrerassistenzsystem zur Ausgabe eines Warnsignals (34) in Form eines von der Anzeigeeinrichtung (20, 31) angezeigten Warnsymbols eingerichtet ist.

12. Fahrerassistenzsystem nach einem der vorstehenden Ansprüche, mit einem Überwachungssystem (12) zur Ortung von Objekten im seitlichen und/oder rückwärtigen Umfeld des eigenen Fahrzeugs, wobei die Anzeigeeinrichtung (20, 31) zum Anzeigen von Warnsignalen (34) an unterschiedlichen Positionen eingerichtet ist, und wobei das Fahrerassistenzsystem dazu eingerichtet ist, die Anzeigeeinrichtung (20, 31) anzusteuern zur Ausgabe eines Warnsignals (34) an einer Position, die von einer Position eines georteten Objektes abhängig ist.

# Fig. 1

# Fig. 2

# Fig. 3

**EP 2 583 864 A2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10318741 A1